(19) Europäisches Patentamt
European Patent Office
Office européen des brevets

(11) **EP 4 365 999 A1**

(12) **EUROPEAN PATENT APPLICATION**

(43) Date of publication:
**08.05.2024 Bulletin 2024/19**

(21) Application number: **23202814.2**

(22) Date of filing: **10.10.2023**

(51) International Patent Classification (IPC):
**H01M 4/62** (2006.01)   **H01M 10/052** (2010.01)
**H01M 10/0562** (2010.01)

(52) Cooperative Patent Classification (CPC):
**H01M 10/0562; H01M 4/622; H01M 10/052;**
H01M 2300/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 KR 20220136841**

(71) Applicant: **Samsung SDI Co., Ltd.
Yongin-si, Gyeonggi-do 17084 (KR)**

(72) Inventors:
• HWANG, Seugsik
16678, Suwon-si, (KR)
• KIM, Mokwon
16678, Suwon-si, (KR)
• LEE, Yonggun
16678, Suwon-si, (KR)

(74) Representative: **Elkington and Fife LLP
Prospect House
8 Pembroke Road
Sevenoaks, Kent TN13 1XR (GB)**

(54) **SOLID ELECTROLYTE, METHOD OF PREPARING THE SAME, AND SOLID-STATE SECONDARY BATTERY INCLUDING THE SAME**

(57)    A solid electrolyte includes a sulfide solid electrolyte, a first binder, and a second binder, wherein the first binder and the second binder have a different energy of adhesion from each other with respect to the sulfide solid electrolyte, wherein the energy of adhesion of the first binder with respect to the sulfide solid electrolyte is less than -300,000 kcal/mol and the energy of adhesion of the second binder with respect to the sulfide solid electrolyte is -300,000 kcal/mol or more, wherein the energy of adhesion of the first binder with respect to the sulfide solid electrolyte has a greater absolute value than the energy of adhesion of the second binder. A solid-state secondary battery includes a cathode, an anode, and a solid electrolyte layer disposed therebetween, wherein at least one of the cathode, the anode, or the solid electrolyte layer includes the solid electrolyte.

FIG. 5

EP 4 365 999 A1

**Description**

FIELD OF THE INVENTION

The disclosure relates to a solid electrolyte, a method of preparing the same, and a solid-state secondary battery including the same.

BACKGROUND OF THE INVENTION

In line with recent requirements in industry, batteries with high energy density and stability are actively being developed. For example, lithium-ion batteries are commercialized not only in the fields of information-related devices and communication devices, but also in the automobile industry. In the automobile industry, safety is greatly emphasized as it affects human lives.

Lithium-ion batteries currently commercially available utilize liquid electrolytes containing a flammable organic solvent, and thus, in the event of a short-circuit, may undergo overheating and cause a fire. In this context, a solid-state secondary battery using a solid electrolyte is proposed.

By not using flammable organic solvents, the solid-state secondary battery may significantly decrease the risk of fire or explosion even in the event of a short-circuit. Therefore, such solid-state secondary batteries may be significantly safer than lithium-ion batteries using liquid electrolytes.

SUMMARY OF THE INVENTION

Provided are a solid electrolyte and a method of preparing the solid electrolyte.

Provided are a solid-state secondary battery having improved fast-charging characteristics by including the above-described solid electrolyte, and a method of preparing the solid-state secondary battery.

Additional aspects will be set forth in part in the description which follows and, in part, will be apparent from the description, or may be learned by practice of the presented embodiments of the disclosure.

According to an aspect of the disclosure, a solid electrolyte includes:
a sulfide-based solid electrolyte (also referred to as "sulfide solid electrolyte"), a first binder, and a second binder, wherein the first binder and the second binder have a different energy of adhesion from each other with respect to the sulfide-based solid electrolyte, wherein the energy of adhesion of the first binder with respect to the sulfide-based solid electrolyte may be less than -300,000 kilocalorie per mole (kcal/mol) and the energy of adhesion of the second binder with respect to the sulfide-based solid electrolyte may be -300,000 kcal/mol or more, wherein the energy of adhesion of the first binder with respect to the sulfide-based solid electrolyte may have a greater absolute value than the energy of adhesion of the second binder with respect to the sulfide-based solid electrolyte.

The energy of adhesion of the second binder with respect to the sulfide-based solid electrolyte may be about -300,000 kcal/mol to about -50,000 kcal/mol. In addition, the difference between the energy of adhesion of the first binder and the energy of adhesion of the second binder may have an absolute value of 350,000 kcal/mol or less.

The first binder may include a repeating unit including one or more polar functional groups selected from a nitrile group (-CN), -C(=O)O- group, or -OC(=O)-group, and the second binder may include a repeating unit including one or more nonpolar functional groups selected from butadiene, ethylene, propylene, styrene, isobutene, isoprene, vinylidene fluoride, or a silicon resin-forming siloxane unit.

In the first binder, a content of the repeating unit containing polar functional groups may be about 5 wt% to about 100 wt%. In addition, the weight ratio of the first binder to the second binder may be about 1:9 to about 9:1.

The first binder may have a weight average molecular weight of about 100,000 g/mol to about 1,500,000 g/mol, and the second binder may have a weight average molecular weight of about 100,000 g/mol to about 2,500,000 g/mol.

The solid electrolyte may further include at least one of a dispersing agent, a leveling agent, or a defoaming agent.

According to another aspect, a solid-state secondary battery may include a cathode, an anode, and a solid electrolyte layer positioned between the cathode and the anode, wherein at least one of the cathode, the anode, or the solid electrolyte layer may include the solid electrolyte layer.

In the solid-state secondary battery, the anode may include an anode current collector and a first anode active material layer, wherein the first anode active material layer may include i) a carbonaceous anode active material, ii) a mixture of a carbonaceous anode active material and at least one of a first metal or a metalloid, iii) a composite of a carbonaceous anode active material and at least one of a first metal or a metalloid, or a combination thereof.

A second anode active material layer may be further included between the anode current collector and the first anode active material layer, wherein the second anode active material layer may include a second metal material and the second metal material may be a second metal, a lithium alloy of lithium with a second metal, or a combination thereof.

The second metal may include at least one of lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a lithium alloy.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

According to another aspect, a method of preparing a solid electrolyte layer may include: preparing a solid electrolyte composition by mixing a sulfide-based solid electrolyte, a first binder, a second binder, and a solvent; and coating and drying the solid electrolyte layer composition onto a substrate, to thereby prepare the above described solid electrolyte.

In the method of preparing a solid electrolyte, the solvent may be at least one of isobutyl isobutyrate, n-butyl butyrate, 2-ethylhexyl acetate, octyl acetate, ethyl hexanoate, di-isobutyl ketone, n-heptyl acetate, hexyl acetate, d-limonene, trimethylbenzene, or isopropyl benzene.

According to another aspect, a binder for a solid electrolyte may include a first binder and a second binder, which have a different energy of adhesion from each other with respect to a sulfide-based solid electrolyte, wherein the first binder may have an energy of adhesion of less than -300,000 kcal/mol with respect to the sulfide-based solid electrolyte, and the second binder may have an energy of adhesion of - 300,000 kcal/mol or more with respect to the sulfide-based solid electrolyte, wherein the energy of adhesion of the second binder with respect to the sulfide-based solid electrolyte may be about -300,000 kcal/mol to about -50,000 kcal/mol.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a graph of stress (Megapascal, MPa) versus strain (percent, %) and shows changes in stress as a function of strain percentage in solid electrolyte layers of Examples 1 and 4 and Comparative Example 1;
FIG. 2 is a graph of stress (Megapascal, MPa) versus strain (percent, %) and shows changes in stress as a function of strain percentage in solid electrolyte layers of Example 8 and Comparative Example 3;
FIG. 3 is a graph of voltage (Volt, V) versus specific capacity (milliampere hour per gram, mAh g$^{-1}$) and shows changes in voltage as a function of specific capacity in solid-state secondary batteries of Manufacture Examples 1 and 4 and Comparative Manufacture Example 1;
FIG. 4 is a graph of capacity (milliampere hour per gram, mAh g$^{-1}$) versus charging time (minute, min) and shows changes in capacity as a function of charging time in solid-state secondary batteries of Manufacture Example 1 and Comparative Manufacture Example 1;
FIG. 5 is a schematic diagram of a structure of a solid-state secondary battery employing an embodiment of a solid electrolyte layer;
FIG. 6 is a schematic diagram of a structure of a solid-state secondary battery employing another embodiment of a solid electrolyte layer.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. "Or" means "and/or." Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer or section from another element, component, region, layer or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

An expression that "metal" as used herein includes metal, semi-metal (metalloid), and a combination thereof.

Hereinbelow, a solid electrolyte according to an embodiment and a solid-state secondary battery including the same, will be described in greater detail with reference to the accompanied drawings.

A solid electrolyte layer of a solid-state secondary battery may include an oxide-based solid electrolyte or a sulfide-based solid electrolyte. The solid electrolyte layer containing a sulfide-based solid electrolyte may be prepared by using a binder to improve adhesion with a substrate, a conducting agent, active materials, and the like.

However, binders known thus far when used provide insufficient adhesion and toughness of solid electrolyte layer, and as a result may give rise to cracks and shortcircuits due to growth of lithium dendrites. If the content of binder is increased in an attempt to increase adhesion, the binder may act as an insulator and hinder migration of lithium ions.

In this context, in order to address the aforementioned issues, the present inventors have arrived at a solid electrolyte having excellent ionic conductivity and increased adhesion of the solid electrolyte, and having no cracks due to its high toughness, by using two different types of polymer binders with a different energy of adhesion with respect to a sulfide-based solid electrolyte.

Provided is a solid electrolyte including a sulfide-based solid electrolyte, a first binder, and a second binder, wherein the first binder and the second binder may have a different energy of adhesion from each other with respect to the sulfide-based solid electrolyte, wherein the energy of adhesion of the first binder with respect to the sulfide-based solid electrolyte may be less than -300,000 kcal/mol and the energy of adhesion of the second binder with respect to the sulfide-based solid electrolyte may be -300,000 kcal/mol or more, wherein the energy of adhesion of the first binder with respect to the sulfide-based solid electrolyte may have a greater absolute value than the energy of adhesion of the second binder.

Here, in the solid electrolyte, the energy of adhesion of a binder may vary depending on the type of the sulfide-based solid electrolyte used.

The two types of binders may include a first binder which has an energy of adhesion with respect to the sulfide-based solid electrolyte of less than -300,000 kcal/mol, and a second binder which has an energy of adhesion with respect to the sulfide-based solid electrolyte of about -300,000 kcal/mol to about -50,000 kcal/mol.

The energy of adhesion of the first binder may be less than -300,000 kcal/mol, about -500,000 kcal/mol to about -310,000 kcal/mol, or about -450,000 kcal/mol to about -310,000 kcal/mol. In addition, the energy of adhesion of the second binder may be about -300,000 kcal/mol to about -50,000 kcal/mol, about -280,000 kcal/mol to about -80,000 kcal/mol, or about -260,000 kcal/mol to about -95,000 kcal. When the energy of adhesion of the first binder and the energy of adhesion of the second binder are within the above ranges, the solid electrolyte, while having excellent toughness and adhesive strength, may also have excellent ionic conductivity at the same time due to unhindered migration of lithium ions.

The difference in energy of adhesion between the first binder and the second binder may have an absolute value of 350,000 kcal/mol or less, of about 50,000 kcal/mol to about 350,000 kcal/mol, about 100,000 kcal/mol to about 330,000 kcal/mol, or about 150,000 kcal/mol to about 250,000 kcal/mol. When the difference in energy of adhesion between the first binder and the second binder is within the above ranges, a solid electrolyte with improved adhesive strength and toughness may be prepared.

As used herein, "energy of adhesion of a first or second binder with respect to a sulfide-based solid electrolyte" refers to an energy emitted when the surface of the first or second binder contacts the surface of the sulfide-based solid electrolyte, and may be defined as an energy required to separate the two materials.

The above-described energy of adhesion may be evaluated as follows.

The energy of adhesion may be calculated using a molecular dynamics simulation package, Forcite and GULP by BIOVIA MATERIALS STUDIO. Force fields used in the calculation were COMPASS3 and Reax force field (reax Li). For binder polymer modeling, an amorphous binder polymer may be modeled using Polymer Builder and Amorphous Cell module, and on the amorphous polymer cell, dynamic simulation may be performed at a time interval of 1 femtosecond (fs) using the NVE Ensemble for 10 picosecond (ps), and cell stabilization may be performed at a time interval of 1 fs using the NPT Ensemble for 10 ps. For the calculation of adhesion energy between polymer binder and solid electrolyte, after configuring a composite layer structure of an amorphous binder and 7x7x7 supercell structure of Li6PS5Cl with 54x54x54 A, the composite layer structure were fully relaxed with geometry optimization and NVE Ensemble (time step: 1fs, total simulation time: 10 ps). The adhesion energy was calculated as the free energy difference of fully relaxed structure of SE/binder composite and each component of SE (solid electrolyte) and binder. The sulfide-based solid electrolyte may be for example, $Li_6PS_5Cl$.

Energies of adhesion of compounds, available as a first binder and a second binder, with respect to a sulfide-based solid electrolyte are as shown in Table 1.

Table 1

| Item | Compound name | Energy of adhesion (kcal/mol) |
|---|---|---|
| First binder | Hydrogenated Nitrile Butadiene Rubber (HNBR) | -444,076.6 |
| | Poly(ethylene-co-vinyl acetate) (EVA) | -389,205.4 |
| | Polyacrylate (ethylacrylate-butylacrylate-butylmethacrylate copolymer) | -316,358.8 |
| Second binder | Polybutadiene rubber (PBR) | -256,902.8 |
| | Styrene Butadiene Rubber (SBR) | -204,937.4 |
| | Polyisobutene (PIB) | -130,184.3 |
| | Styrene Butadiene Styrene copolymer (SBS) | -97,450.8 |

The first binder may include a first repeating unit including one or more polar functional groups selected from a nitrile group (-CN), an ester group (-C(=O)O-), or an acetate group (-OC(=O)-). In the first binder, a content of a first repeating unit having one or more polar functional groups may be about 5 wt% to about 100 wt%, about 10 wt% to about 80 wt%, or about 15 wt% to about 50 wt%, based on a total weight of the first binder.

When the content of the first repeating unit having one or more polar functional groups in the first binder is within the above ranges, the solid electrolyte layer may exhibit excellent adhesive strength, and excellent miscibility with other components such as solvent, dispersant, and the like may be achieved when preparing a solid electrolyte composition. The first binder, due to having the polar functional groups, may exhibit relatively larger surface binding characteristics with respect to a sulfide-based solid electrolyte.

In the first binder, polar functional groups may be present on the main chain and/or side chain of a polymer.

The first binder, the second binder, and a sulfide-based solid electrolyte may be dissolved in a solvent for forming a solid electrolyte. Here, the solvent may be for example, xylene, ethyl hexyl acetate, or the like. The second binder may include a second repeating unit including one or more nonpolar functional groups selected from butadiene, ethylene, propylene, styrene, isobutene, isoprene, vinylidene fluoride, or a silicon resin-forming siloxane unit.

The silicon resin-forming siloxane unit may be, for example, dimethylsiloxane, methylphenylsiloxane, diphenylsiloxane, or a combination thereof.

The second binder, due to containing a nonpolar functional group, may exhibit point bonding characteristics by having a relatively smaller surface in contact with a sulfide-based solid electrolyte.

As described above, by using a first binder characterized by having a relatively large surface contact, together with a second binder characterized by having a relatively smaller surface contact, and controlling the mixing ratio of the first and second binders, improvements in adhesive strength and toughness of the solid electrolyte layer may be achieved without interfering with migration of lithium ions.

The first binder may be an acrylate-based copolymer only including an (meth)acrylate-based repeating unit (also referred to as a "copoly(meth)acrylate" ), an (meth)acrylate-based copolymer including an (meth)acrylate-based repeating unit and a non-(meth)acrylate based repeating unit, a nitrile-based copolymer including an $\alpha$, $\beta$-unsaturated nitrile first repeating unit and a conjugated diene-based second repeating unit, or a combination thereof. As used herein, "-based" can be omitted. For example an "(meth)acylate-based copolymer" can also be referred to as an "(meth)acrylate copolymer."

If the first binder is an (meth)acrylate-based copolymer, the (meth)acrylate-based repeating unit may include one or more of methyl (meth)acrylate, ethyl (meth)acrylate, n-propyl (meth)acrylate, isopropyl (meth)acrylate, n-butyl (meth)acrylate, t-butyl (meth)acrylate, isobutyl (meth)acrylate, 2-ethylhexyl (meth)acrylate, 2-ethylbutyl (meth)acrylate, pentyl (meth)acrylate, hexyl (meth)acrylate, cyclohexyl (meth)acrylate, n-octyl (meth)acrylate, iso-octyl (meth)acrylate, isononyl (meth)acrylate, decyl (meth)acrylate, dodecyl (meth)acrylate, tridecyl (meth)acrylate, tetradecyl (meth)acrylate, octadecyl (meth)acrylate, isobornyl (meth)acrylate, N-(3,4-dihydroxyphenylethyl) (meth)acrylate, 2-(3,4-dihydroxy-2,5-dihydrofuranyl)-1-hydroxyethyl (meth)acrylate, alkoxy alkylene glycol (meth)acrylate, alkoxy dialkylene glycol (meth)acrylate, alkoxy polyethylene glycol) (meth)acrylate, 2-aminoethyl (meth)acrylate hydrochloride, N,N-dimethyl aminoethyl (meth)acrylate, 2-hydroxyethyl (meth)acrylate, hydroxy poly(ethylene glycol) (meth)acrylate, hydroxy polypropylene glycol) (meth)acrylate, hydroxy poly(alkylene glycol) (meth)acrylate, or methyl (meth)acrylate. In addition, the non-(meth)acrylate based repeating unit may include one or more of acrylonitrile, (meth)acrylamide, N-methyl (meth)acrylamide, N,N-dimethyl (meth)acrylamide, N-vinyl pyrrolidone, N-vinyl caprolactam, N-vinyl caprolactone, styrene, 2-vinyl pyridine, 4-vinyl pyridine, or vinyl acetate.

A content of the (meth)acrylate-based repeating unit may be about 50 wt% to about 100 wt%, about 50 wt% to about 99 wt%, or about 60 wt% to about 95 wt%, and a content of the non-acrylate based repeating unit may be 50 wt% or less, about 1 wt% to about 50 wt%, or about 5 wt% to about 40 wt%, each based on a total weight of the acrylate-based copolymer. When the contents of the (meth) acrylate-based repeating unit and the non-(meth)acrylate based repeating unit are within the above ranges, a solid electrolyte having excellent adhesive strength and toughness, and having excellent ionic conductivity may be prepared.

For example, the first binder may be a nitrile-based copolymer having an $\alpha$, $\beta$-unsaturated nitrile-based unit and a conjugated diene-based unit, and here, the conjugated diene-based unit may be partially or fully hydrogenated.

The method by which the conjugated diene is hydrogenated may be performed via a hydrogenation reaction known in the art, for example, a catalytic hydrogenation reaction using a catalyst system such as Rh, Ru, Pd, and Ir. Here, the degree of hydrogenation may be controlled by controlling the amount of catalyst, reaction hydrogen pressure, reaction time, and the like.

The nitrile-based copolymer may be prepared by copolymerization of an $\alpha$, $\beta$-unsaturated nitrile monomer and a conjugated diene-based monomer, and then hydrogenating C=C double bonds within the copolymer. Here, a polymerization reaction and hydrogenation process for the monomers may be conducted by a method known in the art.

Examples of the $\alpha$, $\beta$-unsaturated nitrile monomer may include acrylonitrile, methacrylonitrile, or the like, wherein a single one of the aforementioned components, or a mixture of two or more thereof may be used.

Examples of the conjugated diene-based monomers may include conjugated diene-based monomers having 4-6 carbon atoms, such as 1,3-butadiene, isoprene, 2-methyl-1,3-butadiene, or the like, wherein a single one of the aforementioned components, or a mixture of two or more thereof may be used.

In the nitrile-based copolymer, the $\alpha$, $\beta$-unsaturated nitrile-based repeating unit and the conjugated diene-based repeating unit may be included in a weight ratio of about 10-50 : about 50-90, about 15-49 : about 51-85, about 17-49: about 59-83, or about 20-50 : about 50-80. When the amount of the respective units in the nitrile-based copolymer satisfies the above ranges, increases in solubility in a nonpolar solvent and adhesion with a solid electrolyte may be achieved. Here, the content of the $\alpha$, $\beta$-unsaturated nitrile repeating unit may be measured in accordance with the mill oven method of JIS K 6364, in which the amount of nitrogen generated is measured to convert the bonding amount thereof from $\alpha$, $\beta$-unsaturated nitrile molecular weight, and the mean value of a value being quantified is taken. Further, the content of the conjugated diene-based repeating unit may be calculated by subtracting the weight of the α, β-unsaturated nitrile-based repeating unit from the total weight of the copolymer.

The nitrile-based copolymer may be a hydrogenated acrylonitrile-butadiene rubber that includes an acrylonitrile unit, a butadiene unit, and a hydrogenated butadiene unit. The hydrogenated acrylonitrile-butadiene rubber may have a degree of hydrogenation of butadiene, as defined in Equation 1 below, of about 80 % to about 100 %, or about 94 % to about 100 %.

Equation 1

Degree of Hydrogenation (%) = {Wt% of hydrogenated butadiene/(total wt% of butadiene and hydrogenated butadiene)}X100

Too low a degree of hydrogenation of butadiene may give rise to crosslinking by double bonds in butadiene in a solid electrolyte composition and the like, which results in decreased solubility in solvents and thus, decreased miscibility.

The first binder may be, for example, a terpolymer containing an ethyl acrylate repeating unit, a butyl acrylate repeating unit, and a butyl methacrylate repeating unit; a terpolymer containing an acrylonitrile repeating unit, a styrene repeating unit and a 2-hydroxyethyl (meth)acrylate repeating unit; a hydrogenated acrylonitrile-butadiene rubber; a poly(ethylene-co-vinyl acetate); or a combination thereof.

In the terpolymer containing ethyl acrylate, butyl acrylate, and butyl methacrylate repeating units, the amounts of an ethyl acrylate repeating unit, a butyl acrylate repeating unit, and a butyl methacrylate repeating unit may be, respectively, about 5 wt% to about 50 wt%, about 7 wt% to about 40 wt%, or about 10 wt% to about 35 wt%, with respect to 100 wt% of the total weight of the ethyl acrylate repeating unit, the butyl acrylate repeating unit, and the butyl methacrylate repeating unit. The weight ratio of the ethyl acrylate repeating unit, the butyl acrylate repeating unit, and the butyl methacrylate repeating unit may be, for example, 1:1:1.

In the terpolymer containing an acrylonitrile repeating unit, a styrene repeating unit and a 2-hydroxyethyl (meth)acrylate repeating unit, the content of the acrylonitrile repeating unit may be about 5 wt% to about 50 wt%, about 7 wt% to about 40 wt%, or about 10 wt% to about 30 wt%, with respect to 100 wt% of the total weight of the acrylonitrile repeating unit, the styrene repeating unit, and the 2-hydroxyethyl (meth)acrylate repeating unit. In addition, the content of the styrene repeating unit may be about 5 wt% to 50 wt%, about 7 wt% to 40 wt%, or about 10 wt% to 30 wt%, and the content of the 2-hydroxyethyl (meth)acrylate repeating unit may be about 10 wt% to about 50 wt%, about 15 wt% to about 45 wt%, or about 20 wt% to about 40 wt%, with respect to 100 wt% of the total weight of the acrylonitrile repeating unit, the styrene repeating unit, and the 2-hydroxyethyl (meth)acrylate repeating unit.

Examples of the second binder, as a nonpolar binder, may include styrene butadiene styrene copolymer (SBS), polyisobutene (PIB), polybutadiene rubber (PBR), a silicon resin, styrene butadiene rubber-block copolymer (SBR-Block), a styrene butadiene rubber-random copolymer (SBR-Random ), a styrene-ethylene-butadiene-styrene block copolymer, a styrene-ethylene-butylene-styrene block copolymer (SEBS), a styrene-styrene-butadiene-styrene block copolymer (SSBS), a styrene-isoprene-styrene block copolymer (SIS), butadiene rubber (BR), natural rubber (NR), isoprene rubber (IR), an ethylene-propylene-diene terpolymer (EPDM), acrylonitrile-butadiene rubber, styrene-isoprene rubber, partially or fully hydrogenated products of the aforementioned components, or a combination thereof.

The mixing weight ratio of the first binder to the second binder may vary depending on the respective compositions of the first binder and the second binder. For example, the mixing weight ratio of the first binder to the second binder may be about 1:9 to about 9:1, about 1:7 to about 7:1, about 1:5 to about 5:1, about 1:3 to about 3:1, or about 1:2 to about 2:1. When the mixing weight ratio of the first binder to the second binder is within the above ranges, a tough solid electrolyte with improved adhesive strength may be obtained without a decrease in ionic conductivity.

In the solid electrolyte, the total amount of the first binder and the second binder may be about 1 part by weight to about 5 parts by weight, about 1.2 parts by weight to about 4.5 parts by weight, or about 1.3 parts by weight to about 3 parts by weight, with respect to 100 parts by weight of the total weight of the solid electrolyte. When the total amount of the first binder and the second binder is within the above ranges, a solid electrolyte with improved toughness and adhesive strength with excellent ionic conductivity may be obtained.

The first binder and the second binder may each has a weight average molecular weight of about 100,000 g/mol to about 2,500,000 g/mol, or about 100,000 g/mol to about 1,000,000 g/mol, about 100,000 g/mol to about 800,000 g/mol, about 100,000 g/mol to about 500,000 g/mol, or about 200,000 g/mol to about 300,000 g/mol.

According to an embodiment, the first binder and the second binder may be, respectively, hydrogenated nitrile butadiene rubber (HNBR) and styrene butadiene styrene copolymer (SBS), hydrogenated nitrile butadiene rubber (HNBR) and polyisobutene, hydrogenated nitrile butadiene rubber (HNBR) and styrene butadiene rubber (SBR), polyacrylate and polybutadiene rubber (PBR), or polyacrylate and styrene butadiene styrene copolymer (SBS).

The solid electrolyte may further include one or more of a dispersing agent, a leveling agent, or a defoaming agent.

The dispersing agent may allow uniform distribution of constitutive components of a solid electrolyte.

For the dispersing agent, an anionic compound, a cationic compound, a nonionic compound, or a polymer compound may be used. The dispersing agent may be selected in accordance with the sulfide-based solid electrolyte. The content of the dispersing agent in the solid electrolyte may be, within a range that does not affect battery characteristics, 10 parts by weight or less, about 0.1 parts by weight to about 5 parts by weight, or about 0.3 parts by weight to about 2 parts by weight, with respect to 100 parts by weight of the sulfide-based solid electrolyte.

For the leveling agent, an alkyl-based surfactant, a silicon-based surfactant, a fluorinated surfactant, a metal-based surfactant, or the like may be used. By mixing with such a surfactant, an improvement in flatness may be achieved by preventing the formation of craters that may occur when coating a solid electrolyte slurry. The content of the leveling agent in the solid electrolyte may be, within a range that does not affect battery characteristics, 10 parts by weight or less based on 100 parts by weight of sulfide-based solid electrolyte. For the defoaming agent, a mineral oil-based defoaming agent, a silicone-based defoaming agent, or a polymer-based defoaming agent may be used. The defoaming agent may be selected in accordance with the sulfide-based solid electrolyte particles. The content of the defoaming agent in the solid electrolyte may be, within a range that does not affect battery characteristics, 10 parts by weight or less based on 100 parts by weight of sulfide-based solid electrolyte particles.

The solid electrolyte may have a thickness of about 10 $\mu$m to about 150 $\mu$m, about 15 $\mu$m to about 100 $\mu$m, about 20 $\mu$m to about 100 $\mu$m, or about 30 $\mu$m to about 100 $\mu$m. When the thickness of the solid electrolyte layer is within the above ranges, a solid-state secondary battery having excellent high-rate characteristics and cycle characteristics may be prepared.

The sulfide-based solid electrolyte may be prepared by treating starting materials, such as $Li_2S$ and $P_2S_5$, with a method such as melt-quenching, mechanical milling, and the like. In addition, after such a treatment, a heat-treatment may be conducted. The sulfide-based solid electrolyte may be amorphous or crystalline, or may be in a mixed state thereof.

The sulfide-based solid electrolyte may be, for example, an argyrodite-type compound.

In particular, the sulfide-based solid electrolyte may be, among the sulfide-based solid electrolyte materials described herein, a material that contains at least sulfur (S), phosphorus (P), and lithium (Li), as its constitutive elements. For example, the sulfide-based solid electrolyte may be a material including $Li_2S$-$P_2S_5$. Here, when using a sulfide-based solid electrolyte material containing $Li_2S$-$P_2S_5$, a mixing molar ratio of $Li_2S$ and $P_2S_5$ may be, for example, in a range of $Li_2S : P_2S_5$ = about 50:50 to about 90:10.

The sulfide-based solid electrolyte may be an argyrodite-type compound including one or more of $Li_{7-x}PS_{6-x}Cl_x$ wherein $0 \leq x \leq 2$, $Li_{7-x}PS_{6-x}Br_x$ wherein $0 \leq x \leq 2$, or $Li_{7-x}PS_{6-x}I_x$ wherein $0 \leq x \leq 2$. In particular, the sulfide-based solid electrolyte included in the solid electrolyte may be an argyrodite-type compound including at least one of $Li_6PS_5Cl$, $Li_6PS_5Br$, or LisPSsl.

For example, the sulfide-based solid electrolyte may include a solid electrolyte represented by Formula 1:

$$\text{Formula 1} \qquad Li^+{}_{12-n-z}A^{n+}B^{2-}{}_{6-z}Y'^-{}_z.$$

In Formula 1,

A may be P, As, Ge, Ga, Sb, Si, Sn, Al, In, Tl, V, Nb or Ta,
B may be S, Se or Te,
Y' may be Cl, Br, I, F, CN, OCN, SCN, or $N_3$, and
$1 < n < 5$, and $0 < z < 2$.

The sulfide-based solid electrolyte may be a crystalline argyrodite-based solid electrolyte. The crystalline argyrodite-based solid electrolyte may be obtained by heat treatment at a high temperature of 550 °C or higher. For example, the crystalline argyrodite-based solid electrolyte may include one or more of $Li_{7-x}PS_{6-x}Cl_x$, $0 < x < 2$, $Li_{7-x}PS_{6-x}Br_x$, $0 < x < 2$, or $Li_{7-x}PS_{6-x}I_x$, $0 < x < 2$. For example, the crystalline argyrodite-based solid electrolyte may include one or more of $Li_6PS_5Cl$, $Li_6PS_5Br$, or LisPSsl. The crystalline argyrodite-based solid electrolyte may have a modulus of elasticity of 15 GPa or more, for example.

For example, the sulfide-based solid electrolyte may be at least one of: $Li_2S$-$P_2S_5$; $Li_2S$-$P_2S_5$-LiX, wherein X is a halogen element; $Li_2S$-$P_2S_5$-$Li_2O$; $Li_2S$-$P_2S_5$-$Li_2O$-Lil; $Li_2S$-$SiS_2$; $Li_2S$-$SiS_2$-Lil; $Li_2S$-$SiS_2$-LiBr; $Li_2S$-$SiS_2$-LiCl; $Li_2S$-$SiS_2$-$B_2S_3$-Lil; $Li_2S$-$SiS_2$-$P_2Ss$-Lil; $Li_2S$-$B_2S_3$; $Li_2S$-$P_2S_5$-$Z_mS_n$, wherein m and n are each independently a positive number and Z is one of Ge, Zn or Ga; $Li_2S$-$GeS_2$; $Li_2S$-$SiS_2$-$Li_3PO_4$; or $Li_2S$-$SiS_2$-$Li_pMO_q$, wherein p and q are each independently a positive number and M is one of P, Si, Ge, B, Al, Ga, or In; and $Li_{7-x}PS_{6-x}Cl_x$ ($0 < x < 2$); $Li_{7-x}PS_{6-x}Br_x$ ($0 < x < 2$); or $Li_{7-x}PS_{6-x}I_x$ ($0 < x < 2$).

The solid electrolyte may have an ionic conductivity at 25 °C of about 0.1 mS/cm to about 5 mS/cm, about 0.15 mS/cm to about 5 mS/cm, about 0.2 mS/cm to about 4 mS/cm, about 0.25 mS/cm to about 4 mS/cm, about 0.3 mS/cm to about 3 mS/cm, or about 0.34 mS/cm to about 3 mS/cm. The ion conductivity of the solid electrolyte can be measured by electrochemical impedance spectroscopy (EIS). See, for example, J.-M. Winand et al., "Measurement of Ionic Conductivity in Solid Electrolytes," Europhysics Letters, vol. 8, no. 5, p. 447-452, 1989.

A solid electrolyte according to an embodiment, including a sulfide-based solid electrolyte, a first binder, and a second binder may have a Vickers hardness of 75 HV or more and a toughness of about 0.3 MPa to about 3 MPa. Vickers hardness and toughness can be determined as shown in the evaluation examples described herein. The Vickers hardness of 75 HV or more was obtained by measuring the sample with a force of 0.05 kgf.

A solid electrolyte according to an embodiment, including a sulfide-based solid electrolyte, a first binder, and a second binder may have a toughness of about 0.3 MPa to about 3 MPa, a Young's modulus of about 70 MPa to about 25 GPa, a tensile strength of about 2 MPa to about 50 MPa, and an elongation at break of about 0.1% to about 30%. Young's modulus, tensible strength, and elongation at break can be determined as shown in the evaluation examples described herein.

Hereinbelow, a method of preparing a solid electrolyte according to an example is described in detail.

The solid electrolyte may be prepared through the following processes: preparing a solid electrolyte composition by mixing a sulfide-based solid electrolyte, a first binder, a second binder, and a solvent; and preparing a solid electrolyte layer by coating and drying the solid electrolyte composition onto a substrate.

The solid electrolyte composition may have a solids content of about 50 wt% to about 70 wt%. When the solids content of the solid electrolyte composition is within the above range, it may allow solid electrolyte composition to maintain viscosity stability during layer formation, and thus form a layer with desirable characteristics. The viscosity of the solid electrolyte composition suitable for such desirable layer formation may be about 1,000 cps to about 7,000 cps and may be for example, about 3,000 cps to about 5,000 cps.

The solid electrolyte composition may further include one or more of a dispersing agent, a leveling agent, or a defoaming agent.

The solvent may include one or more of isobutyl isobutyrate, n-butyl butyrate, 2-ethyl hexyl acetate, octyl acetate, ethyl hexanoate, di-isobutyl ketone, n-heptyl acetate, hexyl acetate, d-limonene, trimethylbenzene, or isopropyl benzene. For example, the solvent may include one or more of 2-ethyl hexyl acetate, hexyl acetate, or isopropyl benzene.

According to another aspect, provided is a solid-state secondary battery including a cathode, an anode, and a solid electrolyte layer positioned between the cathode and the anode, wherein at least one of the cathode, the anode, or the solid electrolyte layer includes the solid electrolyte layer according to an embodiment.

The anode may include an anode current collector and a first anode active material layer, and the first anode active material layer may include a carbonaceous anode active material, a first metal, a metalloid, or a combination thereof.

A second anode active material layer may be further included between the anode current collector and the first anode active material layer, and the second anode active material layer may include a second metal material.

The second metal material may be a second metal, a lithium alloy of lithium and a second metal, or a combination thereof.

The second metal may include at least one of lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a lithium alloy.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

According to another aspect, provided is a binder for a solid electrolyte layer, the binder including a first binder and a second binder which have a different energy of adhesion from each other with respect to a sulfide-based solid electrolyte, wherein the first binder may have an energy of adhesion of less than -300,000 kcal/mol with respect to the sulfide-based solid electrolyte, and the second binder may have an energy of adhesion of about -300,000 kcal/mol to about -50,000 kcal/mol with respect to the sulfide-based solid electrolyte.

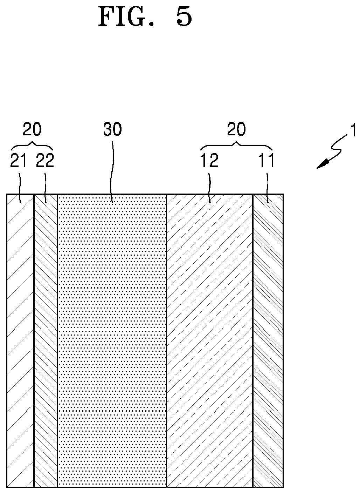

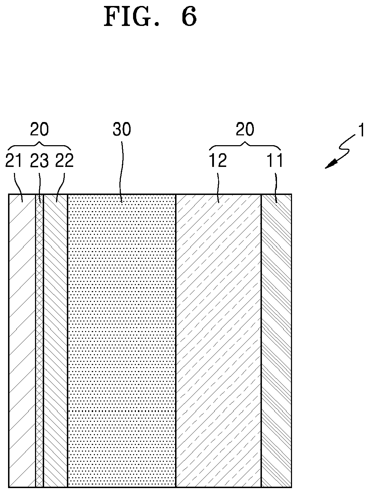

FIG. 5 and FIG. 6 are diagrams describing a solid-state secondary battery 1 according to an embodiment.

Referring to FIG. 5 and FIG. 6, the solid-state secondary battery 1 is a secondary battery using a solid electrolyte layer as electrolyte.

The solid-state secondary battery 1 may include a cathode 10, a solid electrolyte layer 30, and an anode 20.

Cathode

A cathode 10 may include a cathode current collector 11 and a cathode active material layer 12.

For example, the cathode current collector 11 may utilize a plate, a foil, or the like, made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, the cathode active material layer 12 may include a cathode active material.

The cathode active material may be a cathode active material capable of intercalation and deintercalation of lithium ions in a reversible manner. Examples of the cathode active material may include a lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium ion phosphate; and nickel sulfide, copper sulfide, lithium sulfide, iron oxide, vanadium oxide, or the like. Without being limited to the aforementioned examples, the cathode active material may be any suitable material available as a cathode active material in the art. The cathode active material may be a single material or a mixture of two or more materials.

The lithium transition metal oxide may be, for example, a compound represented by any one of the following formulas: $Li_aA_{1-b}B_bD_2$ (In the formula, $0.90 \leq a \leq 1$ and $0 \leq b \leq 0.5$); $Li_aE_{1-b}B_bO_{2-c}D_c$ (In the formula, $0.90 \leq a \leq 1$, $0 \leq b \leq 0.5$, and $0 \leq c \leq 0.05$); $LiE_{2-b}B_bO_{4-c}D_c$ (In the formula, $0 \leq b \leq 0.5$, and $0 \leq c \leq 0.05$); $Li_aNi_{1-b-c}Co_bB_cD_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_\alpha$ (In the formula, $0.90 \leq a \leq 1$, $0 \leq b \leq 0.5$, $0 \leq c \leq 0.05$, $0 < \alpha < 2$); $Li_aNi_{1-b-c}Co_bB_cO_{2-\alpha}F_2$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (In the formula, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (In the formula, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (In the formula, $0.90 \leq a \leq 1$, $0 \leq b \leq 0.5$, $0 \leq c \leq 0.05$, and $0 < \alpha < 2$); $Li_aNi_bE_cG_dO_2$ (In the formula, $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (In the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (In the formula, $0.90 \leq a \leq 1$ and $0.001 \leq b \leq 0.1$); $Li_aCoG_bO_2$ (In the formula, $0.90 \leq a \leq 1$, $0.001 \leq b \leq 0.1$); $Li_aMnG_bO_2$ (In the formula, $0.90 \leq a \leq 1$ and $0.001 \leq b \leq 0.1$); $Li_aMn_2G_bO_4$ (In the formula, $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. In the above compound, A may be Ni, Co, Mn, or a combination thereof; B may be Al, Ni, Co, Mn, Cr, Fe, Mg, Sr, V, a rareearth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added on a surface of the above compound may also be used. Furthermore, a mixture of the above compound with a compound having a coating layer added thereon may also be used. The coating layer added on the surface of the above compound may include, for example, compounds of a coating element, such as oxides and hydroxides of a coating element, oxyhydroxides of a coating element, oxycarbonates of a coating element, and hydroxycarbonates of a coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming a coating layer may be selected from methods that do not adversely affect the physical properties of cathode active material. Examples of a coating method may include spray coating, dip coating, and the like. Specific coating methods are well known by those of ordinary skill in the art, and therefore detailed descriptions thereof will be omitted.

For example, the cathode active material may include, among the aforementioned lithium transition metal oxides, a lithium salt of a transition metal oxide that has a layered rock-salt type structure. The term "layered rock salt type structure" may be, for example, a structure in which oxygen atom layers and metal atom layers are alternatingly and regularly arranged in <111> direction of a cubic rock salt type structure, such that each atom layer forms a two-dimensional plane. The "cubic rock salt type" structure may represent a NaCl type structure, which is a type of lattice structure, and in particular, a structure in which the face centered cubic lattices (fcc) formed by cations and anions are positioned obliquely with respect to each other by 1/2 ridge of unit lattice. Examples of a lithium transition metal oxide having such a layered rock-salt type structure may be a ternary lithium transition metal oxide, such as $LiNi_xCo_yAl_zO_2$ (NCA) and $LiNi_xCo_yMn_zO_2$ (NCM) ($0 < x < 1$, $0 < y < 1$, $0 < z < 1$, and $x + y + z = 1$). When the cathode active material contains a ternary lithium transition metal oxide having a layered rock-salt type structure, further improvements in energy density and thermal stability of the solid-state secondary battery 1 may be achieved.

The cathode active material may be covered by a coating layer as described above. The coating layer may be any material known in the art as a coating layer for cathode active material in a solid-state secondary battery 1. The coating layer may be, for example, $Li_2O-ZrO_2$.

In addition, when the cathode active material contains nickel (Ni) as a ternary lithium transition metal oxide, such as NCA or NCM, increasing the capacity density of the solid-state secondary battery 1 may be achieved by reduction in elution of metal from a cathode active material in a charged state. Thus, the cycle characteristics of the solid-state secondary battery 1 may be improved.

Here, the shape of the cathode active material may be, for example, a particle shape such as a true spherical shape or an elliptical spherical shape. In addition, the particle diameter of the cathode active material is not particularly limited and may be within a range that is applicable to a cathode active material in a conventional solid-state secondary battery 1 in the art. The amount of the cathode active material in the cathode 10 is not particularly limited and may be within a range that is applicable to a cathode 10 of a conventional solid-state secondary battery 1.

In addition to the above-described cathode active material, the cathode 10 may optionally further include other additives such as a conductive material, a binder, a filler, a dispersing agent, an ion conductivity aid, and the like. Examples of the conductive material may include graphite, carbon black, acetylene black, Ketjen black, carbon nanotubes, carbon nano fibers, metal powder, and the like. Examples of the binder may include styrene butadiene rubber (SBR), polytetrafluoroethylene, polyvinylidene fluoride, polyethylene, and the like. For components such as a filler, a dispersing agent, and an ion conductivity aid that can be blended in the cathode 10, any suitable known materials generally used in the art in an electrode of a solid-state secondary battery may be used.

The cathode 10 may optionally further include a solid electrolyte. The solid electrolyte included in the cathode 10 may be similar to or different from a solid electrolyte included in the solid electrolyte layer 30. Detailed information on the solid electrolyte may be found in the description provided with respect to the solid electrolyte layer 30.

The solid-state electrolyte included in the cathode 10 may be, for example, a sulfide-based solid electrolyte. For the sulfide-based solid electrolyte, a sulfide-based solid electrolyte for use in the solid electrolyte layer 30 may be used.

Alternatively, the cathode 10 may be immersed in a liquid electrolyte, for example. The liquid electrolyte may include a lithium salt and at least one of an ionic liquid or a polymer ionic liquid. The liquid electrolyte may be non-volatile. The ionic liquid may refer to a room-temperature molten salt or a salt in a liquid state at room temperature, which consists of ions alone and has a melting point of room temperature or less. The ionic liquid may be one selected from compounds containing: a) at least one cation selected from ammonium, pyrrolidinium, pyridinium, pyrimidinium, imidazolium, piperidinium, pyrazolium, oxazolium, pyridazinium, phosphonium, sulfonium, triazolium, or a mixture thereof; and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, or $(CF_3SO_2)_2N^-$ The ionic liquid may be, for example, at least one of N-methyl-N-propylpyrroldinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)imide. The polymer ionic liquid may contain a repeating unit including: a) at least one cation selected from ammonium, pyrrolidinium, pyridinium, pyrimidinium, imidazolium, piperidinium, pyrazolium, oxazolium, pyridazinium, phosphonium, sulfonium, triazolium, or a mixture thereof; and b) at least one anionselected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^{2-}$, $CF_3SO_3^-$, $(C_2F_5SO_2)_2N^-$, $(C_2F_5SO_2)(CF_3SO_2)N^-$, $NOs^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $CF_3SO_2)_2CH^-$, $(SF_5)_3C^-$, or $(O(CF_3)_2C_2(CF_3)_2O)_2PO^-$. The lithium salt may be any suitable lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO2)(C_yF_{2y+1}SO_2)$ (Here, x and y are each independently a natural number), $LiCl$, $Lil$, or a mixture thereof. The concentration of a lithium salt contained in the liquid electrolyte may be about 0.1 M to about 5 M. The amount of a liquid electrolyte with which the cathode 10 is impregnated may be about 0 part by weight or greater than 0 part by weight to about 100 parts by weight, about 0 part by weight or greater than 0 part by weight to about 50 parts by weight, about 0 part by weight or greater than 0 part by weight to about 30 parts by weight, about 0 part by weight or greater than 0 part by weight to about 20 parts by weight, about 0 part by weight or greater than 0 part by weight to about 10 parts by weight, or about 0 part by weight or greater than 0 part by weight to about 5 parts by weight, with respect to 100 parts by weight of the cathode active material layer 12 not including the liquid electrolyte.

Solid Electrolyte Layer

A solid electrolyte layer 30 may be positioned between a cathode 10 and an anode 20 and include a solid electrolyte layer according to an embodiment.

Anode

Referring to FIG. 5, the anode 20 may include an anode current collector 21 and a first anode active material layer 22.

The anode current collector 21 may be composed of a material that does not react with lithium, that is, forms neither an alloy nor a compound with lithium. Examples of the material forming the anode current collector 21 may include copper (Cu), stainless steel, titanium (Ti), iron (Fe), cobalt (Co), nickel (Ni), and the like. However, the material is not necessarily limited to the aforementioned components and may be any material available for use as an electrode current collector in the relevant technical field. The anode current collector 21 may consist of one of the aforementioned metals, or an alloy of two or more metals thereof, or a coating material. The anode current collector 21 may be, for example, a plate shape or a foil shape.

The first anode active material layer may include a carbonaceous anode active material, a first metal, a metalloid, or a combination thereof.

The carbonaceous anode active material in the first anode active material layer may include an amorphous carbon. Examples of the amorphous carbon may include carbon black (CB), acetylene black (AB), furnace black (FB), Ketjen black (KB), graphene, carbon nanotubes, carbon nanofibers, and the like. However, the amorphous carbon is not necessarily limited to the aforementioned examples but may be any material classified as amorphous carbon in the art.

The first metal or metalloid may include at least one of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). However, the first metal or metalloid is not necessarily limited to the aforementioned materials and may be any material available for use in the art as a metal anode active material or metalloid anode active material capable of forming an alloy or a compound with lithium.

The first anode active material layer may include an anode active material from among a carbonaceous anode active material, and a metal or metalloid anode active material, or may include a mixture of multiple different anode active materials. For example, the first anode active material layer may include amorphous carbon alone, or may include one or more metals or metalloids selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). Alternatively, the first anode active material layer may include a composite of amorphous carbon and at least one metal or metalloid anode active material of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). In the composite, a weight ratio of the amorphous carbon and the metal or metalloid anode active material such as silver, etc. may be about 10:1 to about 1:2, about 5:1 to about 1:1, or about 4:1 to about 2:1, but without being necessarily limited thereto. The weight ratio may be selected in accordance with required features of a solid-state secondary battery. As the first active material layer has such a composition, a further improvement in cycle characteristics of the solid-state secondary battery may be achieved.

The anode active material included in the first anode active material layer may include, for example, a mixture of a first particle composed of amorphous carbon, and a second particle composed of a metal or metalloid. The mixture may be a product of simply mixing the first and second particles, or a mixture product of physically binding the first and second particles together using a binder. The metal or metalloid may include, for example, one or more of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), or zinc (Zn). In some cases, the metalloid may be a semiconductor. The amount of the second particle may be about 8 wt% to about 60 wt%, about 10 wt% to about 50 wt%, about 15 wt% to about 40 wt%, or about 20 wt% to about 30 wt%, with respect to the total weight of the mixture. As the amount of the second particle is within the above ranges, a further improvement in cycle characteristics of the solid-state secondary battery 1 may be achieved.

The first anode active material layer may include i) a composite of a first particle composed of amorphous carbon and a second particle composed of a metal or metalloid; or ii) a mixture of a first particle composed of amorphous carbon and a second particle composed of a metal or a metalloid, wherein the amount of the second particle may be about 1 wt% to 60 wt% relative to the total weight of the composite or the mixture.

For example, the first anode active material layer may have a thickness of about 10 nm to about 10 μm, about 100 nm to about 10 μm, about 200 nm to about 10 μm, about 300 nm to about 10 μm, about 400 nm to about 10 μm, about 500 nm to about 10 μm, about 1 μm to about 10 μm, about 1 μm to about 9 μm, about 1 μm to about 8 μm, about 2 μm to about 7 μm, or about 3 μm to about 7 μm. As the first anode active material layer has a thickness in the above ranges, a short-circuit in the solid-state secondary battery may be prevented, and cycle characteristics thereof may be improved.

As shown in FIG. 6, a solid-state secondary battery 1 according to an embodiment may have a second anode active material layer 23 positioned between an anode current collector 21 and a first anode active material layer 22.

The second anode active material layer 23 may be placed at the time of battery assembly, or may be absent during battery assembly and then formed as a precipitation layer after charging.

The second anode active material layer may include a second metal material.

The second metal material may be a second metal, a lithium alloy of lithium with a second metal, or a combination thereof.

The second metal may include at least one of lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a lithium alloy.

The lithium alloy may include lithium in combination with silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second anode active material layer may be lithium metal or a third metal coated on a current collector. Alternatively, the second anode active material layer may be a lithium metal or lithium alloy layer precipitated during charging. Lithium precipitation during charging may lead to an increase in volume and thickness of the second anode active material layer. In particular, the second metal may form an Li-M2 alloy via a reversible reaction during charging and discharging of the solid-state secondary battery. During the charging process or disposition process of the solid-state secondary battery, or during both of the aforementioned processes, the second anode active material layer may be formed as a precipitation layer or a deposition layer, and the second anode active material layer may be a lithium metal layer or a lithium metal alloy layer.

During the charging process or disposition process of the solid-state secondary battery, or during both of the aforementioned processes, the second metal in the second anode active material layer may form an alloy with lithium.

There may be a process included, of disposing, for example, bonding, the second anode active material layer onto a first anode active material layer through pressing. While being pressed, some of lithium present in the second anode active material layer may be inserted into the first anode active material layer.

The disposition (e.g., bonding) may be a press compaction process. During the press process, some of lithium present in the second anode active material layer may be inserted into the first anode active material layer.

According to another embodiment, a second anode active material may be further formed as a precipitation layer or a deposition layer during the charging process or disposition process of the solid-state secondary battery, or during both of the aforementioned processes. The second anode active material layer may be a lithium metal layer or a lithium metal alloy layer. The second anode active material layer may have a thickness of 1 μm or more, 5 μm or more, 10 μm or more, about 10 μm to about 1,000 μm, about 10 μm to about 500 μm, about 10 μm to about 200 μm, about 10 μm to about 100 μm, or about 10 μm to about 50 μm.

Preparation of Cathode

Materials forming a cathode active material layer 12, such as a cathode active material, a binder, etc., are added to a nonpolar solvent to produce a slurry. The produced slurry was coated and dried on a cathode current collector 11. The laminate obtained therefrom was pressed to produce a cathode 10. The press may be conducted using methods such as a roll press, a flat press, and a hydrostatic pressure, but is not necessarily limited to the aforementioned methods and may be any press available in the art. The press process may be omitted. A mixture of materials forming the cathode active material layer 12 may be compacted in a pellet form, or may be stretched (molded) into a sheet form to thereby produce the cathode 10. In a case in which the cathode 10 is prepared as described above, the cathode current collector 11 may be omitted. Alternatively, the cathode 10, before use, may be impregnated with an electrolyte solution.

Preparation of Solid-State Secondary Battery

Once the anode 20, the solid electrolyte layer 30, and the cathode 10 are prepared, a solid-state secondary battery 1 may be prepared by stacking the cathode 10 and the anode 20 with the solid electrolyte layer 30 therebetween, or preparing such a stack and then pressing the stack.

The pressing may be conducted by techniques such as roll pressing, uni-axial pressing, flat pressing, warm isostatic pressing (WIP), cold isostatic pressing (CIP), and the like. However, the pressing is not necessarily limited to the aforementioned techniques and may be any press method available in the art. A pressure applied during the pressing may be about 50 MPa to about 750 MPa, for example. The duration for which the pressure is applied may be about 5 milliseconds to about 60 minutes. The pressing may be conducted, for example, at room temperature, a temperature of 90 °C or less, or a temperature of about 20 °C to about 90 °C. Alternatively, the pressing may be conducted at a high temperature of 100 °C or more.

Next, the cathode 10 may be placed on the other side of the solid electrolyte layer 30 bonded to the anode 20 and pressed thereon by a predetermined pressure, to thereby dispose, e.g., bond the cathode 10 on the other side of the solid electrolyte layer 30. Alternatively, for the cathode 10 that is impregnated with a liquid electrolyte solution, a battery may be prepared by stacking without pressing.

The pressing may be conducted by techniques such as roll pressing, uni-axial pressing, flat pressing, warm isostatic pressing (WIP), cold isostatic pressing (CIP), and the like. However, the pressing is not necessarily limited to the aforementioned techniques and may be any press method available in the art. A pressure applied during the pressing may be about 50 MPa to about 750 MPa, for example. The duration for which the pressure is applied may be about 5 milliseconds to about 60 minutes. The pressing may be conducted, for example, at room temperature, a temperature of 90 °C or less, or a temperature of about 20 °C to about 90 °C. Alternatively, the pressing may be conducted at a high temperature of 100 °C or more.

The present inventive concept will be described in greater detail through the following examples and comparative examples. However, it will be understood that the examples are provided only to illustrate the present inventive concept and not to be construed as limiting the scope of the present inventive concept.

Preparation of Solid Electrolyte

Example 1

98 parts by weight of an argyrodite sulfide solid electrolyte $Li_6PS_5Cl$, 1.3 parts by weight of a first binder and a second binder combined, the first binder being hydrogenated nitrile-butadiene rubber (degree of hydrogenation: about 99% or higher, mixing weight ratio of nitrile and butadiene=(17:83), weight average molecular weight: 300,000, THERBAN® LT 1707 VP *by* ARLANXEO) and the second binder being SBS (mixing weight ratio of styrene, butadiene, and styrene=(10:80:10), weight average molecular weight: 200,000, Kumho Petrochemical Co., Ltd. Lab Synthetic Products) , 0.7 parts by weight of a nonionic dispersing agent (CRODA, Hypermer KD13), and 66.64 parts by weight of 2-ethyl hexyl acetate were placed in a nalgene container and mixed using a paste mixer, to thereby form a solid electrolyte slurry having a solids content of about 60 wt%. The mixing weight ratio of the first binder and the second binder was 1:1.

A nonwoven-fabric separator having a thickness of 10 μm and 90% porosity was attached and fixed on a release film. The solid electrolyte slurry was poured onto the non-woven fabric and coated by doctor blade, and then was dried at 80 °C in a convection oven and vacuum-dried at 70 °C for 2 hours in a vacuum oven, to thereby produce a solid electrolyte having a thickness of about 95 μm.

Examples 2-9

A solid electrolyte was prepared following the same process as in Example 1, except the composition of the first binder and the second binder when preparing the solid electrolyte layer slurry was changed to conditions shown in Table 2 below.

Comparative Examples 1-10

A solid electrolyte was prepared following the same process as in Example 1, except the polymer binder when preparing the solid electrolyte layer slurry was changed as shown in Table 2 below.

Table 2

| Item | Binder Composition (weight ratio) | Difference in absolute value between the energy of adhesion (E1) of the first binder and the energy of adhesion (E2) of the second binder (kcal/mol) |
|---|---|---|
| Example 1 | HNBR:SBS=1:1 | 346,625 |
| Example 2 | HNBR:SBS=2:5 | 346,625 |
| Example 3 | HNBR:SBS=1:2 | 346,625 |
| Example 4 | HNBR:PIB=1:1 | 313,892 |
| Example 5 | HNBR:SBR=1:1 | 239,139 |
| Example 6 | Polyacrylate: PBR=4:3 | 59,456 |
| Example 7 | Polyacrylate:SBS=1:1 | 218,908 |
| Example 8 | Polyacrylate: SBS=3:2 | 218,908 |
| Example 9 | Polyacrylate: SBS=2:1 | 218,908 |
| Comparative Example 1 | HNBR | - |
| Comparative Example 2 | EVA | - |
| Comparative Example 3 | Polyacrylate (PA) | - |
| Comparative Example 4 | PBR | - |
| Comparative Example 5 | SBS | - |

(continued)

| Item | Binder Composition (weight ratio) | Difference in absolute value between the energy of adhesion (E1) of the first binder and the energy of adhesion (E2) of the second binder (kcal/mol) |
|---|---|---|
| Comparative Example 6 | PIB | - |
| Comparative Example 7 | HNBR:EVA=1:1 | 54,871 |
| Comparative Example 8 | HNBR:PA=1:2 | 127,718 |
| Comparative Example 9 | SBS/PIB=1:1 | 32,734 |
| Comparative Example 10 | SBS/SBR=1:1 | 107,487 |

In Table 2, the polyacrylate is a terpolymer containing an ethylacrylate repeating unit, a butylacrylate repeating unit, and a butylmethacrylate repeating unit, and the mixing weight ratio thereof was 1:1:1, and the weight average molecular weight thereof was 300,000 g/mol. The mixing weight ratio of styrene-butadiene-styrene in SBS was 10:80:10 and the weight average molecular weight thereof was 200,000 g/mol. EVA is an abbreviation for ethylene vinyl acetate and has a weight average molecular weight of about 250,000 g/mol, and the mixing weight ratio of ethylene repeating unit to vinyl acetate repeating unit was 6:4.

PBR is an abbreviation for polybutadiene rubber, and has a weight average molecular weight of about 250,000 g/mol. SBR is an abbreviation for styrene butadiene rubber, and has a weight average molecular weight of about 250,000 g/mol. The mixing weight ratio of styrene to butadiene was 2:8. PIB is an abbreviation for polyisobutene and has a weight average molecular weight of 2,400,000 g/mol.

Preparation of Solid-State Secondary Battery

Manufacture Example 1

Cathode

As a cathode active material, $LiNi_{0.8}Co_{0.15}Mn_{0.05}O_2$ (NCM) coated with $Li_2O$-$ZrO_2$ (LZO) was prepared. The LZO-coated $LiNi_{0.8}Co_{0.15}Mn_{0.05}O_2$ (NCM) was prepared according to a preparing method disclosed in KR 10-2016-0064942A.

As a solid electrolyte, crystalline argyrodite solid electrolyte ($Li_6PS_5Cl$) powder was prepared. As a conducting agent, carbon nanofibers (CNFs) were prepared. As a binder, VDF-HFP copolymer was used. The above components were mixed in a weight ratio of cathode active material : solid electrolyte : conducting agent: binder = 84 : 14.6 : 0.2 : 1.2, and the resulting mixture was formed into a large sheet to thereby produce a cathode sheet. The prepared cathode sheet was compressed onto a cathode current collector made of a carbon-coated aluminum foil, having a thickness of 18 $\mu$m, to thereby form a cathode. The thickness of the cathode active material layer was about 100 $\mu$m (cathode 4 mAh/cm² L/L).

Anode

As an anode, a carbon-silver (AgC) anode having a thickness of about 10 $\mu$m prepared as follows was used.

The AgC anode was prepared by forming an anode active material layer that contains a composite (AgC) including silver (Ag) and a carbonaceous active material having a thickness of 10 $\mu$m on a stainless-steel substrate having a thickness of 10 $\mu$m. The mixing weight ratio of carbonaceous active material and silver in the composite was 3:1.

The anode active material layer was prepared as follows: carbon black (CB) having a particle diameter of about 38 nm as carbonaceous material was mixed and combined with a mixture obtained by mixing 7 grams of NMP (N-methyl-2-pyrrolidone) in 2.692 grams of a PVA-PAA binder solution (Solvay Specialty Polymers, Solef 5130), and the resulting mixture was subjected to first stirring at 1,000 rpm for 30 minutes to produce a slurry, and then the slurry was bar-coated on a stainless steel substrate and dried at 80 °C for 1 hour and vacuum-dried for 12 hours.

Solid Electrolyte Layer

The solid electrolyte prepared in Example 1 as a solid electrolyte layer was placed on the anode and the cathode was placed on the solid electrolyte layer to thereby prepare a stack. The prepared stack was treated with warm isostatic pressing (WIP) at 85 °C and at 500 MPa for 30 minutes.

Manufacture Examples 2-9

A solid-state secondary battery was prepared following the same process of Manufacture Example 1, except that as the solid electrolyte layer, the respective solid electrolytes of Examples 2-9 were used instead of the solid electrolyte layer of Example 1.

Comparative Manufacture Examples 1-10

A solid-state secondary battery was prepared following the same process as Manufacture Example 1, except that as the solid electrolyte layer, the respective solid electrolytes of Comparative Examples 1-10 were used instead of the solid electrolyte layer of Example 1.

Evaluation Example 1: Ionic Conductivity

Ten sheets of each of the solid electrolyte layers of Examples 1 to 9 and Comparative Examples 1 to 11 were stacked together, and after attaching an indium film to each of the top and bottom sides of the solid electrolyte layer, the stack was compressed by a pressure of 4 tons to thereby prepare an electron-blocking cell. Then, ion conductivity of the electron-blocking cell was measured at 25 °C using a direct current (DC) polarization method. The results thereof are shown in Table 3. Evaluation Example 2: Vickers Hardness

- After warm isotatic pressure (WIP) was applied to a solid electrolyte layer at 85 °C, 500 MPa, for 30 min, Vickers hardness was measured using Mitutoyo, HM-220B by pressing on the surface of the solid electrolyte layer surface with a force of 0.05 kgf.
- Hardness, $HV = 1.8544\ F/d^2$ (kgf/mm$^2$)

Evaluation Example 3: Mandrel Bending Test

The solid electrolyte layer was tested for the resistance to cracking on bending at radius of curvatures of 5 mm and 2 mm and was evaluated as follows. The results of evaluation are shown in Table 3.

　　○: No cracking occurred
　　X: Cracking occurred

Evaluation Example 4: Toughness

After evaluating a solid electrolyte layer (thickness: 90 μm) having a rectangular shape of width 12 mm x length 60 mm for tensile strength using a universal test machine, the area under stress-strain curve was obtained to calculate toughness. The results of toughness evaluation are shown in Table 3 below.

Table 3

| Item | Binder Composition (weight ratio) | Ionic conductivity (mS/cm @ 25 °C) | Vickers hardness (HV, at 0.05kgf) | Mandrel Bending Test (5 mm) | Mandrel Bending Test (2 mm) | Toughness (MPa) |
|---|---|---|---|---|---|---|
| Example 1 | HNBR/SBS =1/1 | 0.400 | 93.2 | ○ | ○ | 0.339 |
| Example 2 | HNBR/SBS =2/5 | 0.502 | 90.6 | ○ | ○ | 0.343 |
| Example 3 | HNBR/SBS =1/2 | 0.455 | 94.7 | ○ | ○ | 0.330 |

(continued)

| Item | Binder Composition (weight ratio) | Ionic conductivity (mS/cm @ 25 °C) | Vickers hardness (HV, at 0.05kgf) | Mandrel Bending Test (5 mm) | Mandrel Bending Test (2 mm) | Toughness (MPa) |
|---|---|---|---|---|---|---|
| Example 4 | HNBR/PIB= 1/1 | 0.406 | 100.1 | ○ | ○ | 0.307 |
| Example 5 | HNBR/SBR =1/1 | 0.400 | 93.4 | ○ | ○ | 0.305 |
| Example 6 | PA/PBR=4/3 | 0.461 | 100.3 | ○ | ○ | 0.303 |
| Example 7 | PA/SBS=1/1 | 0.530 | 105.0 | ○ | ○ | 0.370 |
| Example 8 | PA/SBS=3/2 | 0.572 | 111.8 | ○ | ○ | 0.415 |
| Example 9 | PA/SBS=2/1 | 0.511 | 108.5 | ○ | ○ | 0.382 |
| Comparative Example 1 | HNBR | 0.239 | 90.6 | ○ | ○ | 0.252 |
| Comparative Example 2 | EVA | 0.122 | 84.2 | ○ | X | 0.275 |
| Comparative Example 3 | Polyacrylate (PA) | 0.472 | 86.2 | ○ | X | 0.289 |
| Comparative Example 4 | PBR | 0.252 | 82.9 | X | X | 0.217 |
| Comparative Example 5 | SBS | 0.405 | 83.0 | X | X | 0.202 |
| Comparative Example 6 | PIB | 0.394 | 103.2 | X | X | X |
| Comparative Example 7 | HNBR/EVA =1/1 | 0.201 | 88.5 | ○ | ○ | 0.268 |
| Comparative Example 8 | HNBR/PA=1 12 | 0.417 | 92.4 | ○ | ○ | 0.301 |
| Comparative Example 9 | SBS/PIB=1/ 1 | 0.373 | 93.8 | X | X | X |
| Comparative Example 10 | SBS/SBR=1 /1 | 0.397 | 94.5 | X | X | X |

Referring to Table 3, the solid electrolytes of Examples 1 to 9 while having excellent ionic conductivity at 25 °C, were found to have good flexibility such that defects such as cracks were not found in the solid electrolyte layer upon bending.

On the contrary, the solid electrolyte layer of Comparative Example 1, using a HNBR binder alone, was found to have a reduced toughness compared to the solid electrolyte layers of Examples 1-9. In particular, it was found that the solid electrolyte layer of Comparative Example 3 using a polyacrylate binder alone shows a defect, such as a crack having a curvature of radius of 2 mm, upon bending. In addition, as shown in Table 3, the solid electrolyte layers of Comparative Examples 4 to 6 were found to have unsatisfactory flexibility that results in cracks upon bending.

Evaluation 5: Evaluation of Young's modulus, tensile strength, elongation at break, and toughness

A solid electrolyte having a rectangular shape of width 12 mm x length 60 mm (thickness: 90 μm) was evaluated for tensile strength using a universal test machine, was evaluated for toughness by calculating the area under stress-strain curve, was evaluated for Young's modulus by using the slope of stress-strain curve, and was evaluated for elongation at break by using the ratio of elongated length to gauge length.

- ASTM D882, Standard Test Method for Tensile Properties of Thin Plastic Sheeting by UTM
- Sample: Width 12 mm x Length 60 mm x Thickness 90 μm
- Test Speed: 0.1 mm/sec
- Gauge Length : 10 mm
- Toughness: Measured by calculating the area under stress-strain curve

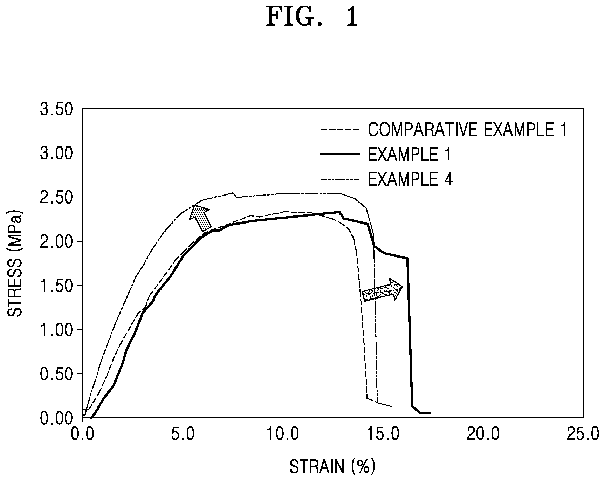

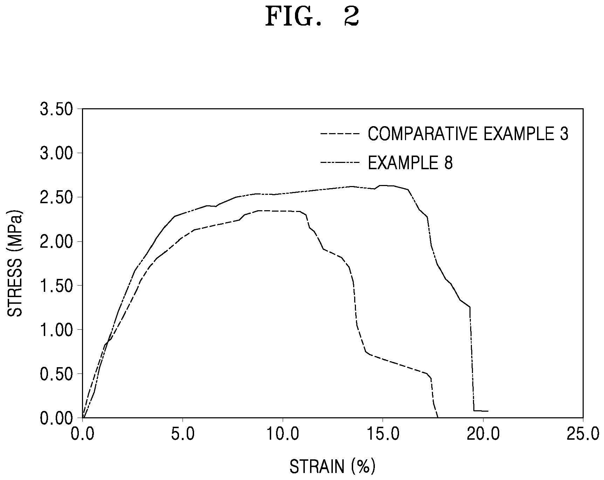

Some of the evaluation results are shown in Table 4 and FIGS. 1 and 2.

Table 4

| Item | Binder Composition (weight ratio) | Young's modulus (MPa) | Tensile strength (MPa) | Elongation at break (%) | Toughness (MPa) |
|---|---|---|---|---|---|
| Example 1 | HNBR:SBS=1:1 | 204.44 | 2.75 | 14.33 | 0.339 |
| Example 5 | HNBR:SBR=1:1 | 76.4 | 2.48 | 18.60 | 0.305 |
| Example 7 | Polyacrylate(PA): SBS=1 :1 | 117.1 | 2.44 | 14.6 | 0.370 |
| Example 8 | Polyacrylate(PA): SBS=3 :2 | 117.20 | 2.57 | 20.12 | 0.415 |
| Com parativ e Example 1 | HNBR | 73.5 | 2.27 | 14.55 | 0.252 |
| Com parativ e Example 3 | Polyacrylate(PA) | 196.00 | 2.42 | 14.00 | 0.289 |

As shown in Table 4, it was found that the solid electrolyte using the first binder and the second binder as described herein has enhanced flexibility and toughness in comparison to the solid electrolyte of Comparative Example 1 using HNBR binder alone, or the solid electrolyte of Comparative Example 3 using the polyacrylate alone.

Referring to FIG. 1, it was found that the solid electrolytes of Examples 1 to 3 using HNBR and SBS binders, and the solid electrolyte of Example 4 using HNBR and PIB, have improved tensile strength compared to the electrolyte of Comparative Example 1. In addition, the solid electrolyte layers of Examples 7 to 9, using the polyacrylate and SBS binder, were found to have more improved tensile strength than that of the solid electrolyte of Comparative Example 3.

Evaluation Example 6: Fast Charging Characteristics

The solid-state secondary batteries prepared in Manufacture Example 1 and Comparative Manufacture Example 1, using the solid electrolyte layers of Example 1 and Comparative Example 1, respectively, were evaluated for fast-charging characteristics as follows (3C CC-CV evaluation (cathode 4 mAh/cm$^2$ L/L): 10% SOC → 80% charging time).

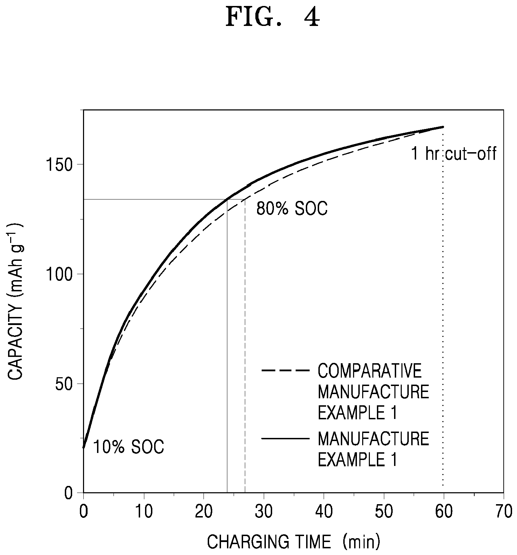

At 25 °C, each solid-state secondary battery was subjected to first charging and discharging with a current of 0.1 C (that is, a current value for completely discharging theoretical capacity within 10 h) wherein the charging was performed in a constant current-constant voltage condition, an end voltage was 4.25 V, a cut-off current was 0.05 C, and an end-of-discharge voltage was 2.5 V. After the first charging and discharging, the battery was charged to SOC 10% at 0.1 C, and then charged under a constant current-constant voltage condition at 3C and an end voltage of 4.25 V, with a cut-off current of 0.05C, to thereby calculate a charging time (T) required for the battery to reach from 10% SOC to 80% SOC. The results thereof are shown in Table 5 and FIG. 4. Here, SOC 10 means a charged state that is 10% charged when the total charging capacity of the battery is 100%, and when viewed as a discharged state, this means a state that is 90% discharged.

Table 5

| 3C CC-CV | SOC 10% → 80% Charging time (minutes) |
|---|---|
| Manufacture Example 1 | 24 |
| Comparative Manufacture Example 1 | 26 |

As shown in Table 5 and FIG. 4, the solid-state secondary battery of Manufacture Example 1, employing a solid electrolyte layer using the first binder and the second binder, was found to have a reduced charging time compared to the solid-state secondary battery employing a solid electrolyte layer using HNBR binder alone. From this result, it could be confirmed that that due to improved flexibility and toughness of the solid electrolyte layer, the solid-state secondary battery of Manufacture Example 1 has reduced resistance at cathode-anode interface and thus has improved fast-charging characteristics.

Evaluation Example 7: High-Rate Characteristics

The solid-state secondary batteries prepared in Manufacture Examples 1 and 4, and Comparative Manufacture Example 1, using the solid electrolyte layers of Examples 1 and 4, and Comparative Example 1, respectively, were charged at a constant current at a rate of 0.1 C until the battery reaches a voltage of 4.25 V (vs. Li), and then under a constant voltage mode, were cut off at a current of 0.05 C rate while maintaining 4.25 V. Subsequently, the battery was discharged at a constant current rate of 0.1 C until the battery voltage reached 2.5 V (vs. Li) during discharge (formation cycle).

The lithium batteries after the formation cycle were charged at a constant current rate of 0.33 C at 45 °C until the battery voltage reached 4.25 V (vs. Li), and then in a constant voltage mode, were cut off at 0.05 C rate while maintaining 4.25 V. Subsequently, the batteries were discharged at a constant current rate of 0.33 C rate until the battery voltage reached 2.5 V (vs. Li) during discharge (1st cycle).

The batteries after the 1st cycle were charged at a constant current rate of 1 C at 45 °C until the battery voltage reached 4.25 V (vs. Li), and then in a constant voltage mode, were cut off at 0.05 C current rate while maintaining 4.25 V. Subsequently, the batteries were discharged at a constant current rate of 1 C until the battery voltage reached 2.5 V (vs. Li) during discharging. The above cycle was repeated under the same conditions up to the 60th cycle (60 repetitions).

In all charge-discharge cycles, after each charge/discharge cycle, a rest period of 10 minutes was provided.

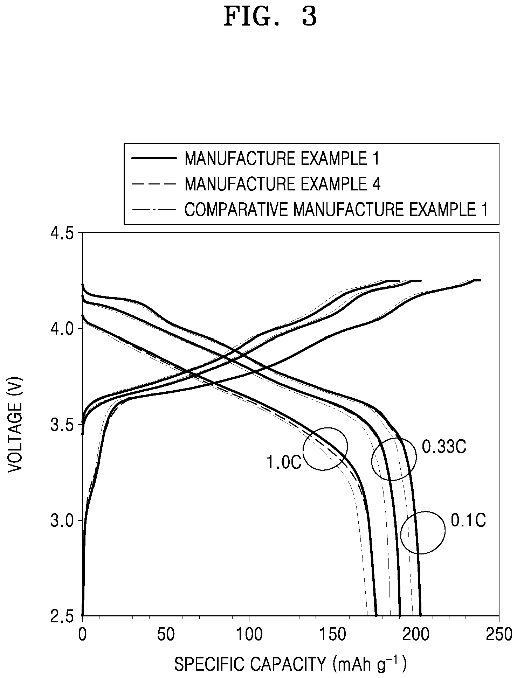

Each solid-state secondary battery was evaluated for high-rate characteristics, and the results thereof are shown in FIG. 3.

As shown in FIG. 3, it was found that the solid secondary batteries of Manufacture Examples 1 and 4, due to their reduced resistance at the anode-cathode interface, show improved high-rate characteristics compared to Comparative Manufacture Example 1.

Also, as a result of examining the sticky properties on the surface of the solid electrolyte of Example 1 and Comparative Example 1, the surface of the solid electrolyte of Example 1 showed sticky properties, but the solid electrolyte of Comparative Example 1 did not show sticky properties. As a result, it can be seen that the solid electrolyte of Example 1 had improved adhesion compared to the solid electrolyte of Comparative Example 1.

Although one or more embodiments have been described with reference to the drawings and examples, these embodiments are merely exemplary, and those skilled in the art shall understand that various modifications and equivalent other embodiments are possible therefrom. Accordingly, the scope of the present application shall be defined by the appended claims.

A solid electrolyte layer according to an embodiment can have enhanced adhesive strength, toughness, and flexibility without deterioration in ionic conductivity. By using such a solid electrolyte layer, a solid secondary battery having improved fast-charging characteristics and high-rate characteristics may be prepared.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A solid electrolyte, comprising:

   a sulfide solid electrolyte, a first binder, and a second binder,
   wherein the first binder and the second binder have a different energy of adhesion with respect to the sulfide solid electrolyte,
   wherein the first binder has an energy of adhesion of less than -300,000 kilocalorie per mole with respect to the sulfide solid electrolyte,
   and the second binder has an energy of adhesion of -300,000 kilocalorie per mole or more with respect to the sulfide solid electrolyte,
   wherein the energy of adhesion of the first binder with respect to the sulfide solid electrolyte has a greater absolute value than the energy of adhesion of the second binder with respect to the sulfide solid electrolyte.

2. The solid electrolyte of claim 1, wherein the second binder has an energy of adhesion of -300,000 kilocalorie per mole to -50,000 kilocalorie per mole with respect to the sulfide solid electrolyte; and/or
wherein an absolute value of a difference between the energy of adhesion of the first binder and the energy of adhesion of the second binder is 350,000 kilocalorie per mole or less.

3. The solid electrolyte of claims 1 or 2, wherein the first binder comprises a repeating unit comprising one or more polar functional groups selected from a nitrile group, -C(=O)O- group, or -OC(=O)-group, and
the second binder comprises a repeating unit comprising one or more nonpolar functional groups selected from butadiene, ethylene, propylene, styrene, isobutene, isoprene, vinylidene fluoride, or a silicon resin-forming siloxane unit.

4. The solid electrolyte of any of claims 1-3, wherein a weight ratio of the first binder to the second binder is 1:9 to 9:1.

5. The solid electrolyte of any of claims 1-4, wherein the first binder is a co poly(meth)acrylate only including (meth)acrylate repeating units, an (meth)acrylate copolymer including an (meth)acrylate repeating unit and a non-(meth)acrylate repeating unit, a nitrile copolymer comprising an $\alpha$, $\beta$-unsaturated nitrile first repeating unit and a conjugated diene second repeating unit, or a combination thereof.

6. The solid electrolyte of claim 5, wherein in the co poly(meth)acrylate and the (meth)acrylate copolymer,

the (meth)acrylate repeating unit is one or more of methyl (meth)acrylate, ethyl (meth)acrylate, n-propyl (meth)acrylate, isopropyl (meth)acrylate, n-butyl (meth)acrylate, t-butyl (meth)acrylate, isobutyl (meth)acrylate, 2-ethylhexyl (meth)acrylate, 2-ethylbutyl (meth)acrylate, pentyl (meth)acrylate, hexyl (meth)acrylate, cyclohexyl (meth)acrylate, n-octyl (meth)acrylate, iso-octyl (meth)acrylate, isononyl (meth)acrylate, decyl (meth)acrylate, dodecyl (meth)acrylate, tridecyl (meth)acrylate, tetradecyl (meth)acrylate, octadecyl (meth)acrylate, isobornyl (meth)acrylate, N-(3,4-dihydroxyphenylethyl) (meth)acrylate, 2-(3,4-dihydroxy-2,5-dihydrofuranyl)-1-hydroxyethyl (meth)acrylate, alkoxy alkylene glycol (meth)acrylate, alkoxy dialkylene glycol (meth)acrylate, alkoxy poly(ethylene glycol) (meth)acrylate, 2-aminoethyl (meth)acrylate hydrochloride, N,N-dimethyl aminoethyl (meth)acrylate, 2-hydroxyethyl (meth)acrylate, hydroxy poly(ethylene glycol) (meth)acrylate, hydroxy polypropylene glycol) (meth)acrylate, or hydroxy poly(alkylene glycol) (meth)acrylate, and
the non-(meth)acrylate repeating unit comprises one or more of acrylonitrile, (meth)acrylamide, N-methyl (meth)acrylamide, N, N-dimethyl (meth)acrylamide, N-vinyl pyrrolidone, N-vinyl caprolactam, N-vinyl caprolactone, styrene, 2-vinyl pyridine, 4-vinyl pyridine, or vinyl acetate;
preferably wherein the first binder is an acrylate copolymer, and a content of the (meth)acrylate repeating unit in the (meth)acrylate copolymer is 50 wt% to less than 100 wt%, and a content of the non-(meth)acrylate repeating unit in the (meth)acrylate copolymer is greater than 0 wt% to 50 wt%.

7. The solid electrolyte of claims 5 or 6, wherein the first binder is the nitrile copolymer, and the nitrile copolymer is a hydrogenated acrylonitrile-butadiene rubber comprising a nitrile repeating unit, a butadiene repeating unit, and a hydrogenated butadiene repeating unit; and/or
wherein the first binder is the nitrile copolymer, and in the nitrile copolymer, a content of the nitrile repeating unit is 10 wt% to 50 wt%.

8. The solid electrolyte of any of claims 1-7, wherein the first binder is a terpolymer containing an ethyl acrylate repeating unit, a butyl acrylate repeating unit, and a butyl methacrylate repeating unit; a terpolymer containing an acrylonitrile repeating unit, a styrene repeating unit, and a 2-hydroxyethyl (meth)acrylate repeating unit; a hydrogenated acrylonitrile-butadiene rubber; a poly(ethylene-co-vinyl acetate), or a combination thereof; and/or
wherein the second binder is a styrene butadiene styrene copolymer, polyisobutene, polybutadiene rubber , a silicone resin, a styrene butadiene rubber-block copolymer, a styrene-ethylene-butylene-styrene block copolymer, a styrene-ethylene-butadiene-styrene block copolymer,
a styrene-butadiene rubber-random copolymer, a styrene-styrene-butadiene-styrene block copolymer, a styrene-isoprene-styrene block copolymer, a butadiene rubber, natural rubber, an isoprene rubber, an ethylene-propylene-diene terpolymer, an acrylonitrile-butadiene rubber, a partially or fully hydrogenated product of an acrylonitrile-butadiene rubber, a styrene-isoprene rubber, or a combination thereof.

9. The solid electrolyte of any of claims 1-8, wherein a total content of the first binder and the second binder is 1 part by weight to 5 parts by weight with respect to a total weight of 100 parts by weight of the solid electrolyte layer, and the first binder and the second binder are each a hydrogenated nitrile butadiene rubber and a styrene butadiene styrene copolymer, a hydrogenated nitrile butadiene rubber and polyisobutene, a hydrogenated nitrile butadiene rubber and a styrene butadiene rubber, a polyacrylate and polybutadiene rubber, or a polyacrylate and styrene butadiene styrene copolymer.

10. The solid electrolyte of any of claims 1-9, wherein the sulfide solid electrolyte is an argyrodite-type compound.

11. The solid electrolyte of any of claims 1-10,
wherein the sulfide solid electrolyte is at least one selected from $Li_2S-P_2S_5$; $Li_2S-P_2S_5-LiX$, wherein X is a halogen element; $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$, wherein m and n each are a positive number, and Z is one of Ge, Zn or Ga; $Li_2S-GeS_2$; $Li_2S-SiS_2-Li_3PO_4$; $Li_2S-SiS_2-Li_pMO_q$, wherein p and q are each independently a positive number, and M is one of P, Si, Ge, B, Al, Ga, or In; $Li_{7-x}PS_{6-x}Cl_x$, wherein 0<x<2; $Li_{7-x}PS_{6-x}Br_x$, wherein 0<x<2; or $Li_{7-x}PS_{6-x}I_x$, wherein 0<x<2.

12. The solid electrolyte of any of claims 1-11,

wherein the solid electrolyte layer has an ion conductivity at 25 °C of 0.1 millisiemens per centimeter to 5 millisiemens per centimeter, a Vickers hardness of 75 HV or more, and a toughness of 0.3 megapascal to 3 megapascals, and
the solid electrolyte layer has a Young's modulus of 70 megapascals to 25 gigapascals, a tensile strength of 2 megapascals to 50 megapascals, and an elongation break of 0.1 % to 30 %.

13. A solid-state secondary battery comprising:

a cathode, an anode, and a solid electrolyte layer positioned between the cathode and the anode,
wherein at least one of the cathode, the anode, or the solid electrolyte layer comprises the solid electrolyte of any of claims 1-12.

14. The solid-state secondary battery of claim 13,

wherein the anode comprises an anode current collector and a first anode active material layer,
wherein the first anode active material layer comprises i) a carbonaceous anode active material, ii) a mixture of a carbonaceous anode active material and at least one of a first metal or a metalloid, iii) a composite of a carbonaceous anode active material and at least one of a first metal or a metalloid, or a combination thereof; preferably
further comprising a second anode active material layer between the anode current collector and the first anode active material layer,
wherein the second anode active material layer comprises a second metal material,
and the second metal material is a second metal, a lithium alloy of lithium and a second metal, or a combination thereof.

15. A method of preparing the solid electrolyte of any of claims 1-12, the method comprising:

preparing a solid electrolyte composition by mixing the sulfide solid electrolyte, the first binder, the second binder, and a solvent; and
coating and drying the solid electrolyte layer composition on a substrate, to thereby prepare the solid electrolyte layer of any of claims 1-12.

# FIG. 1

# FIG. 2

# FIG. 3

# FIG. 4

# FIG. 5

# FIG. 6

**EP 4 365 999 A1**

Europäisches
Patentamt
European
Patent Office
Office européen
des brevets

# EUROPEAN SEARCH REPORT

Application Number

**EP 23 20 2814**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 200 264 A1 (HYUNDAI MOTOR CO LTD [KR]; KIA MOTORS CORP [KR] ET AL.) 2 August 2017 (2017-08-02) * abstract * * paragraphs [0001] – [0032] * * paragraphs [0042] – [0056] * * claims 1-15 * ----- | 1-15 | INV. H01M4/62 H01M10/052 H01M10/0562 |
| A | US 2015/147660 A1 (FUJIKI SATOSHI [JP] ET AL) 28 May 2015 (2015-05-28) * abstract * * paragraphs [0006] – [0027] * * paragraphs [0118] – [0125] * * claims 1-20 * * examples 1, 7 * ----- | 1-15 | |

TECHNICAL FIELDS
SEARCHED       (IPC)

**H01M**

The present search report has been drawn up for all claims

| Place of search | Date of completion of the search | Examiner |
|---|---|---|
| Munich | 21 March 2024 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 23 20 2814

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | Publication date | Patent family member(s) | | Publication date |
|---|---|---|---|---|---|
| EP 3200264 | A1 | 02-08-2017 | CN | 107039655 A | 11-08-2017 |
| | | | EP | 3200264 A1 | 02-08-2017 |
| | | | JP | 6755736 B2 | 16-09-2020 |
| | | | JP | 2017135094 A | 03-08-2017 |
| | | | KR | 20170089333 A | 03-08-2017 |
| | | | US | 2017214051 A1 | 27-07-2017 |
| | | | US | 2019341616 A1 | 07-11-2019 |
| US 2015147660 | A1 | 28-05-2015 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020160064942 A

**Non-patent literature cited in the description**

- **J.-M. WINAND et al.** Measurement of Ionic Conductivity in Solid Electrolytes. *Europhysics Letters,* 1989, vol. 8 (5), 447-452